# EUROPEAN PATENT APPLICATION

(11) **EP 2 380 812 A2**
(43) Date of publication of application: **26.10.2011**
(21) Application number: 11003014.5
(22) Date of filing: 11.04.2011
(51) Int. Cl.: B65B 51/22, B29C 65/08, B29C 65/78

(54) **Adjustable ultrasound sealer for automatic forming and packaging machines**

(30) Priority: 26.04.2010 IT RE20100006 U
(71) Applicant: Casoli, Marco, 42020 Montecavolo (RE) (IT)
(72) Inventor: Casoli, Marco, 42020 Montecavolo (RE) (IT)
(74) Representative: Lecce, Giovanni

(57) **Abstract**

An ultrasound sealer, for welding the overlapped flaps (4) of "block" packages (3) of foodstuff, is applicable in line on automatic forming and packaging machines of the same packages. It comprises at least one ultrasound generator with piezoelectric transducer (16) whereto at least one ultrasound welding nozzle or tip (sonotrode) (5) connects, which is arranged on a body (14) mounted on a carriage (13) sliding on rails (12). The approach stroke of the ultrasound tip(s) (5) for welding the overlapped flaps (4), and of retraction after the welding, may be adjusted according to the type, dimensions and shape of the "blocks" (3) to be sealed.

## Description

The present invention relates to an ultrasound sealer for automatic forming and sealing machines; in particular, for sealing packages of foodstuff such as butter, margarine, lard, soft cheese and other things.

It is known that at present, foodstuff of the type mentioned above is divided into portions and wrapped in papers coupled to polyethylene sheets, or in polyethylene-only sheets, or in cuts of food-grade plastic material, for forming closed packages that ensure the integrity thereof.

For this reason, the envelopes of such packages, either of parallelepiped or cylindrical shape, are closed at the ends by outer flaps that overlap, creating rectangular or triangular projections that are then sealed by adhesives, heat sealing or metal riveting.

It is also known that the current sealing means, although valid from the closing viewpoint, exhibit some drawbacks;
in particular: the use of adhesives does not ensure an even distribution thereof between said end flaps; the use of heat sealing may produce excess heat that may damage the packaged products; the use of metal rivets implies an excessive loss of rivet parts by drop from the sealing machines, as well as the difficulty in opening the envelopes when the products are used and the fact that non-homogeneous waste residues remain.

The object of the present invention is to eliminate the above drawbacks by an ultrasound sealer for automatic forming and packaging machines characterised according to what claimed in the first claim. Further features are defined in the dependent claims.

The advantages achieved by the present invention essentially consist in using the ultrasounds for producing a very fast and clean sealing welding for points of said flaps, preventing undesired overheating, ensuring undamaged and safe closing of the packages, avoiding waste and accelerating the production time.

The invention is described in more detail hereinafter with reference to an application, given by way of a non-limiting example, of parallelepiped packages of foodstuff, such as those indicated in the preamble, with reference to the annexed drawings, wherein:
fig. 1 shows the schematic side view of an example of an in line block packaging machine wherein the side flaps to be sealed (triangular in the specific case) are formed,
fig. 2 shows the cross-section view of single and opposite ultrasound sealing units, according to the invention, aligned opposite along a block packaging machine,
fig. 3 shows a schematic plan view of an example of in line feeding of the "blocks" before, during and after the ultrasound sealing of the opposite side flaps,

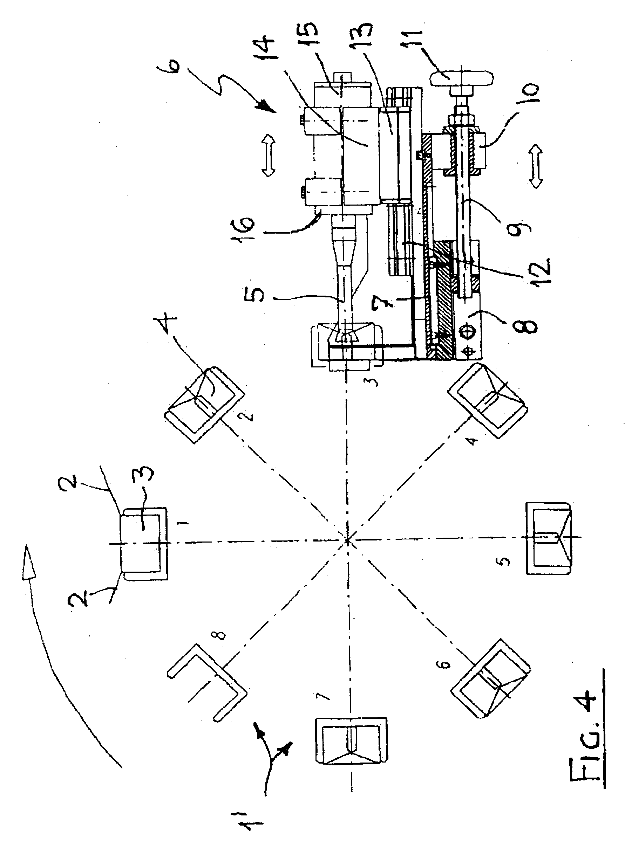

fig. 4 shows the schematic side view of an example of block packaging machine with vertical wheel, aligned to an ultrasound sealer,

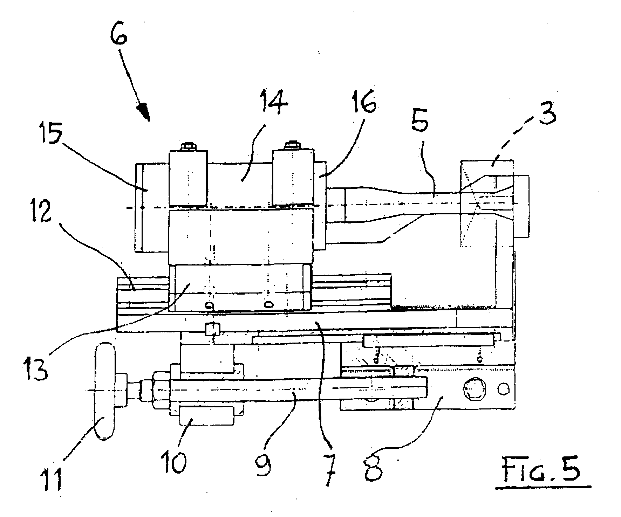

fig. 5 shows the enlarged side view of a sealer according to the invention, and
figgs. 6 and 7 show the front and plan views of a dual welding tip or nozzle sealer.

With reference to the figures, the foodstuff portions that advancing in steps along the linear (1) or vertical wheel (1') feeding unit(s) are wrapped either in papers coupled to polyethylene sheets, or in polyethylene-only sheets, or in cuts of food-grade plastic material (2), up to forming "blocks" (3) closed at the side ends with overlapped flaps (4) (triangular flaps, in the case described by way of an example).

Thereafter, the "blocks" (2) thus packaged, which advancing in steps, temporarily stop in such position that their overlapped flaps (4) arrange in alignment with the ultrasound sealing tips or nozzles (5) of the sealers (6), preassembled opposite-wise, at the sides of the same feeding units (1, 1').

The sealers (6), according to the invention, comprise a base (7) applicable to the bearing structures (8) of any feeding unit; for the positioning thereof, they comprise alignment adjustment means, such as screw (9) or scroll (10) couplings or equivalent, which may be controlled manually (11) or by a motor.

On said base (7) there are arranged pairs of rails (12) whereon, in approach and in retraction with a stroke controlled by mechanical, electrical, cam or piston control, a carriage (13) slides for supporting and positioning the body (14) comprising electrical connection means (15), at least one ultrasound generator with piezoelectric transducer (16) whereto at least one ultrasound welding tip or nozzle (sonotrode) (5) connects; the approach stroke for welding the overlapped flaps (4) and of retraction after the welding, may be adjusted according to the type, dimensions and number of the "blocks" (3) to be sealed concurrently.

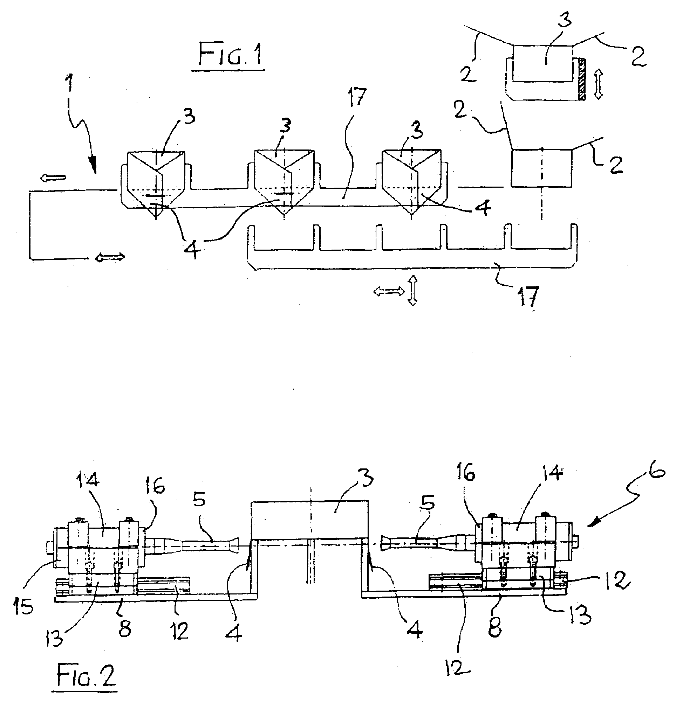

Figure 1 shows examples of means for transporting the "blocks" (3) consisting of forward and return shifting plates (17) at overlapped levels; however, the application of the sealer (6) also on linear (1) or vertical wheel (1') feeding units, provided with continuous chain or belt conveyors, or of other type, is contemplated as well.

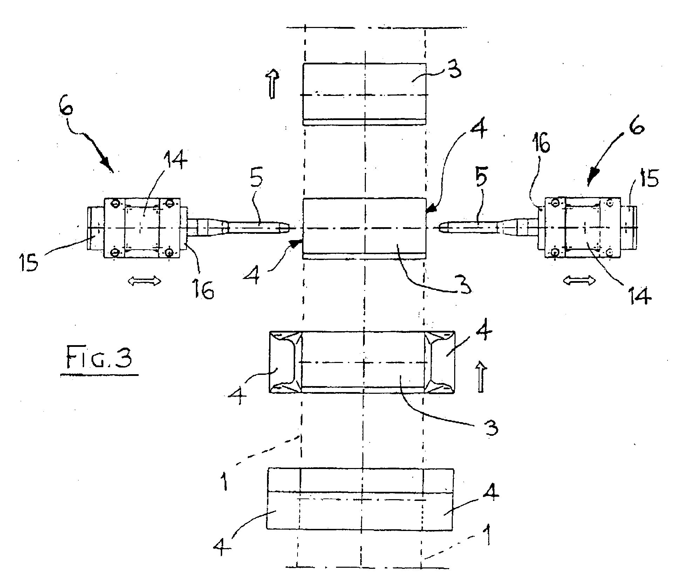

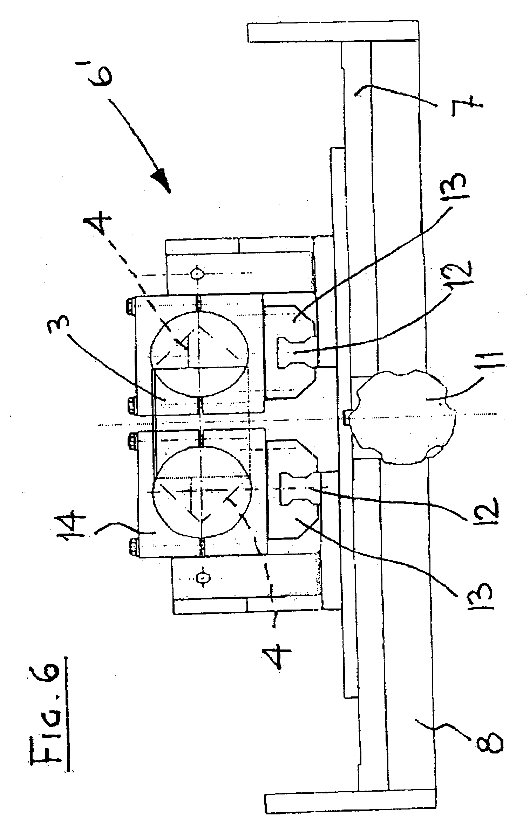

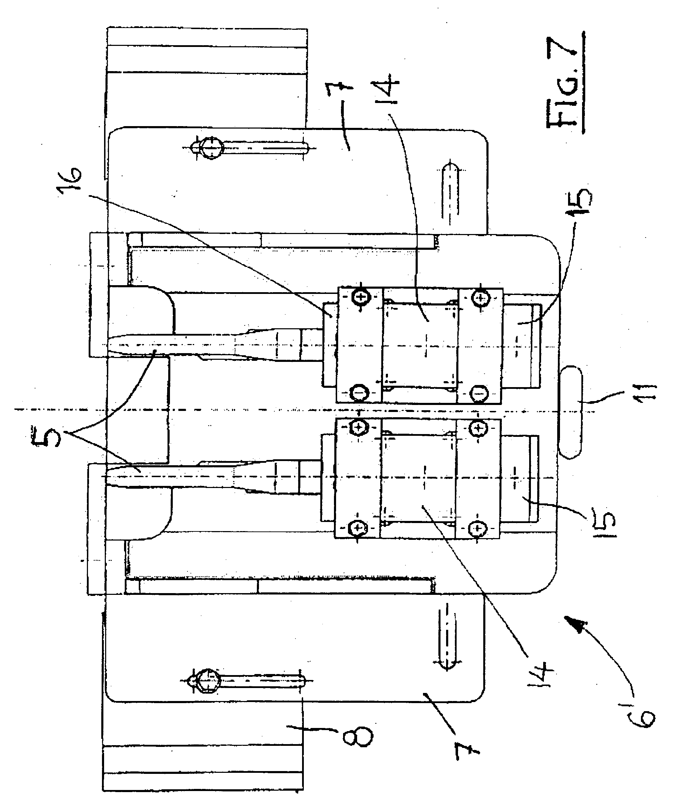

The ultrasound welding tips or nozzles (5) are connected individually, in pairs or more, to single or dual separate ultrasound generators, according to the required welding speed. Figures 2 and 3 show single opposite sealers (6) along linear feeding units (1) for sealing the side flaps of single "blocks" (3); figures 6 and 7 show a sealer (6') with dual carriage (12) for the concurrent ultrasound welding of the two opposite flaps (4), vertically oriented, of "blocks" (3) aligned on a side; such application allows halving the sealing time and doubling productivity.

The same sealing time is in any case drastically reduced thanks to the instant melting action per points, of any size and shape (for example circular, square, star or others), generated with ultrasounds, which also excludes any possibility of heating of the packaged products, along with great cleanliness.

## Claims

1. Ultrasound sealer (6, 6') for welding the overlapped flaps (4) of "block" packages (3) of foodstuff, **characterised in that** it is applicable in association with automatic forming and packaging machines (1, 1') of the same packages and **in that** it comprises at least one ultrasound generator with piezoelectric transducer (16), whereto at least one ultrasound welding tip or nozzle (sonotrode) (5) connects, arranged on a body (14) mounted on a carriage (13) sliding on rails (12), the welding approach stroke of said overlapped flaps (4), and of retraction after the welding, being adjustable according to the type, dimensions and number of "blocks" (3) to be sealed.

2. Ultrasound sealer according to claim 1, **characterised in that** it is applicable on automatic forming and packaging machines (1) of the in line type.

3. Ultrasound sealer according to claim 1, **characterised in that** it is applicable on automatic forming and packaging machines (1') of the vertical wheel (1') type.

4. Ultrasound sealer according to claims 1, 2 and 3, **characterised in that** said ultrasound welding tips or nozzles (5) are connected individually, in pairs or more, to single or dual separate ultrasound generators.

5. Ultrasound sealer according to claims 1 to 4, **characterised in that** it comprises a base (7) applicable to the bearing structures (8) of any feeding unit and **in that** it comprises means for adjusting the positioning, such as screw (9) or scroll (10) couplings, with manual (11) or motor control.

6. Ultrasound sealer according to the previous claims, **characterised in that** the approach stroke for welding said overlapped flaps (4) of said packages (3), and of retraction after the welding, are adjustable according to the type, dimensions and number of said "blocks" (3) to be sealed concurrently; said advance and retraction strokes being obtained by pneumatic, electrical, mechanical, cam, piston motors.
